# NEUE EUROPÄISCHE PATENTSCHRIFT

(11) **EP 2 322 029 B2**
(45) Veröffentlichungstag und Bekanntmachung des Hinweises auf die Entscheidung über den Einspruch: **20.06.2018**
(45) Hinweis auf die Patenterteilung: 20.11.2013
(21) Anmeldenummer: 11155187.5
(22) Anmeldetag: 15.09.2009
(51) Int. Cl.: A01D 41/127

(54) **Fahrerassistenzsystem für landwirtschaftliche Arbeitsmaschine**
Driver assistance system for agricultural workmachine
Système d'assistance du conducteur pour machine de travail agricole

(30) Priorität: 20.02.2009 DE 102009009767
(43) Veröffentlichungstag der Anmeldung: 18.05.2011
(62) Teilanmeldung aus: 09170323.1
(73) Patentinhaber: CLAAS Selbstfahrende Erntemaschinen GmbH, 33428 Harsewinkel (DE)
(72) Erfinder: Dr. Baumgarten, Joachim, 48361, Beelen (DE); Neu, Sebastian, 49196, Bar Laer (DE); Fitzner, Werner, 48231, Warendorf (DE)

(56) Entgegenhaltungen:
- EP-A1- 0 928 554
- EP-A1- 1 504 648
- EP-A1- 1 704 767
- DE-A1- 10 147 733
- US-A1- 2003 216 158
- US-A1- 2003 216 158
- Betriebsanleitung Claas CO 228 (Typ 466)/CEBIS, Druckvermerk D-06.95-50-BEV

## Beschreibung

Die Erfindung betrifft ein Fahrerassistenzsystem für landwirtschaftliche Arbeitsmaschinen nach dem Oberbegriff des Anspruchs 1.

Aus der DE 101 47 733 ist ein Fahrerassistenzsystem bekannt geworden, welches den Bediener einer landwirtschaftlichen Arbeitsmaschine bei der Optimierung der Arbeitsparameter der Arbeitsorgane unterstützt. Das Fahrerassistenzsystem umfasst neben einer komplexen Anzeigeeinheit eine Recheneinheit zur Verarbeitung diverser Sensorsignale. Die als Mähdrescher ausgeführte landwirtschaftliche Arbeitsmaschine umfasst eine Vielzahl von Arbeitsorganen, wie etwa ein Schneidwerk, eine Drescheinrichtung, Trennorgane und zumindest eine Reinigungseinrichtung, die mit einer Vielzahl von Sensiereinrichtungen gekoppelt sind, die neben Arbeitsparametern der Arbeitsorgane auch Effizienzparameter der landwirtschaftlichen Arbeitsmaschine, wie etwa Kornverlust, Kornqualität und Überkehrmenge detektieren können.

Die von den Sensiereinrichtungen ermittelbaren Informationen werden der zentralen Recheneinheit zugeführt, die dann aus diesen Signalen in der Anzeigeinrichtung visualisierbare Informationen ableitet. Die visualisierten Informationen umfassen neben Arbeitsparametern der landwirtschaftlichen Arbeitsmaschine, etwa die Dreschtrommeldrehzahl, die Reinigungsgebläsedrehzahl, den Erntegutdurchsatz, die Dreschkorbweite, auch Effizienzparameter, wie etwa die Kornverluste der Reinigungs- und der Trenneinrichtung. Zur Optimierung der verschiedenen Arbeitsparameter wird in der DE 101 47 733 nun eine Methode vorgeschlagen, bei der der Bediener die landwirtschaftliche Arbeitsmaschine in einem ersten Verfahrensschritt mit einer auf den zu erwartenden Erntegutdurchsatz abgestimmten Fahrgeschwindigkeit durch den zu erntenden Bestand führt, sodass der Mähdrescher in einem bestimmten Zeitintervall mit einer nahezu gleichbleibenden Erntegutmenge beaufschlagt wird. Der Bediener hat nun zunächst abzuwarten, dass der Mähdrescher einen sogenannten eingeschwungenen Zustand erreicht, bei dem ein annähernd gleichbleibendes, gutes oder schlechtes Arbeitsergebnis erziel wird. Dieses Arbeitsergebnis wird aufgezeichnet und dem Bediener in der Anzeigeeinheit visualisiert. Stellt sich ein unbefriedigendes Arbeitsergebnis ein, ändert der Bediener des Mähdreschers zunächst einen erfolgversprechenden Arbeitsparameter eines Arbeitsorgans mehrmals und wartet jeweils die Einschwingphase des Mähdreschers mit dem geänderten Arbeitsparameter ab. Alle Arbeitsergebnisverläufe werden aufgezeichnet, sodass der Bediener schließlich entscheiden kann, bei welchem konkreten Wert des Arbeitsparameters das beste Arbeitsergebnis erzielt wurde. Dieser konkrete Wert wird dann an dem jeweiligen Arbeitsorgan eingestellt, sodass sich schließlich ein verbessertes Arbeitsergebnis der landwirtschaftlichen Arbeitsmaschine einstellt.

Eine derartige Methode hat vor allem den Nachteil, dass ein relativ großer Zeitraum benötigt wird, bis die verschiedenen Arbeitsparameter des Mähdreschers in einem optimierten Parameterbereich arbeiten, da für jeden Arbeitsparmeter die offenbarte Einstellprozedur abgearbeitet werden muss. Zudem hängt eine schnelle und zielführende Optimierung bei einer derart strukturierten Einstellmethode maßgeblich von dem Kenntnisstand des Bedieners der landwirtschaftlichen Arbeitsmaschine ab, da sich die verschiedenen Arbeitsparameter mitunter über sehr komplexe Wechselwirkungen gegenseitig beeinflussen.

Aus der EP 1 504 648 ist ein Verfahren und zugehörige Vorrichtung bekannt geworden, welches die Definition von Regelalgorithmen zur Optimierung von Betriebsparametern landwirtschaftlicher Arbeitsmaschinen vereinfacht. Während derartige Systeme vor allem den Vorteil haben, dass sie den Bertreiber einer landwirtschaftlichen Arbeitsmaschine effizient zu optimierten Betriebsparametern führt, sind diese Systeme nicht in der Lage in eine direkte Interaktion mit dem Bediener der landwirtschaftlichen Arbeitsmaschine zu treten.

Es ist deshalb Aufgabe der Erfindung die beschriebenen Nachteile des Standes der Technik zu vermeiden und insbesondere ein Fahrerassistenzsystem zur Optimierung der Effizienz einer landwirtschaftlichen Arbeitsmaschine vorzuschlagen, welches innerhalb kürzester Zeit eine optimierte Arbeitsweise der landwirtschaftlichen Arbeitsmaschine sicherstellt ohne den Bediener zu bevormunden.

Diese Aufgabe wird erfindungsgemäß durch die kennzeichnenden Merkmale der Ansprüche 1 und 16 gelöst.

Indem das Fahrerassistenzsystem unter Berücksichtigung zumindest einer Auswahl verfügbarer Informationen kritische Arbeitsweisen einer landwirtschaftlichen Arbeitsmaschine durch das Verfahren gemäß Anspruch 1 überwindet, wird sichergestellt, dass innerhalb kürzester Zeit eine optimierte Arbeitsweise der landwirtschaftlichen Arbeitsmaschine erreicht wird, ohne dass der Bediener während der Optimierung durch das Fahrerassistenzsystem bevormundet wird.

Dies hat zudem den Vorteil, dass der Bediener den chronologischen Ablauf der Optimierung sicher nachvollziehen kann, über den erreichten Effekt informiert bleibt und zu jedem Zeitpunkt hinreichend über die durchgeführten und noch durchzuführenden Handlungen unterrichtet ist.

n einer vorteilhaften Ausgestaltung der Erfindung kann das Fahrerassistenzsystem zudem nach Abarbeitung des Schritts d.) in einem Schritt e.) die Beurteilung und Überprüfung konträrer Effizienzparameter und/oder Qualitätskriterien durchführen. Dies hat den Vorteil, dass die Wechselwirkungen zwischen den verschiedenen Effizienzparametern, Qualitätskriterien und Arbeitsparametern überwacht und negative Einflüsse optimierter Parameter auf konträre Effizienzparameter und/oder Qualitätskriterien erkannt werden, sodass stets die Arbeitsweise der landwirtschaftlichen Arbeitsmaschine als Ganzes berücksichtigt wird.

In einer weiteren vorteilhaften Ausgestaltung der Erfindung kann der Bediener der landwirtschaftlichen Arbeitsmaschine die Rücksetzung des optimierten Arbeitsparameters bewirken, wenn ein oder mehrere konträre Effizienzparameter und/oder Qualitätskriterien außerhalb der zulässigen Wertebereiche liegen, sodass eine negativer Einfluss auf die Gesamtarbeitsweise der landwirtschaftlichen Arbeitsmaschine vermieden wird.

Das erfindungsgemäße Fahrerassistenzsystem kann dann sehr flexibel eingesetzt werden, wenn in Schritt a.) zumindest Arbeitsparameter der Arbeitsorgane der landwirtschaftlichen Arbeitsmaschine und/oder Effizienzparameter der landwirtschaftlichen Arbeitsmaschine überwacht werden und eine kritische Arbeitsweise dann identifiziert wird, wenn zumindest ein Arbeitsparameter und/oder zumindest ein Effizienzparameter von in der Recheneinheit hinterlegten Sollwertbereichen abweicht oder der Bediener einen Effizienzparameter als nicht zufriedenstellend beurteilt.

Ein stringent vom Bediener bestimmter Ablauf der Parameteroptimierung wird vor allem dann sichergestellt, wenn der Bediener in einen intensiven interaktiven Austausch mit dem erfindungsgemäßen Fahrerassistenzsystem tritt, wobei alle wesentlichen Parameteränderungen vom Bediener aktiv bestätigt werden müssen. Dies stellt sicher, dass der Bediener bei der Optimierung der Arbeitsweise seiner Maschine nicht vom dem Fahrerassistenzsystem bevormundet wird, was letztlich auch die Akzeptanz der vorgenommenen Parameteroptimierung erhöht. Dem Rechnung tragend wird der Bediener der landwirtschaftlichen Arbeitsmaschine erfindungsgemäß in einem ersten Menüschritt zur Auswahl des zu optimierenden Effizienzparameters und in einem weiteren Menüschritt zur Auswahl des zu verbessernden Qualitätskriteriums des im ersten Menüschritt festgelegten Effizienzparameters aufgefordert.

Dem Grundsatz der bedienergeführten Optimierung wird in einer vorteilhaften Ausgestaltung auch dadurch Rechnung getragen, dass das Fahrerassistenzsystem in Abhängigkeit von den vom Bediener der landwirtschaftlichen Arbeitsmaschine definierten Effizienzparametern und zugehörigen Qualitätskriterien einen optimierten Arbeitsparameter für zumindest ein Arbeitsorgan vorschlägt und der Bediener der landwirtschaftlichen Arbeitsmaschine durch Bestätigung oder Ablehnung die Einstellung des optimierten Arbeitsparameters an dem zumindest einen Arbeitsorgan bewirken muss.

Damit eine fehlerarme Beurteilung des Optimierungsergebnisses möglich wird und der Bediener über die sich einstellende Änderung des Arbeitsergebnisses zu jedem Zeitpunkt hinreichend unterrichtet ist, sieht eine vorteilhafte Ausgestaltung der Erfindung vor, dass nach Bestätigung der Einstellung des optimierten Arbeitsparameters an dem zumindest einen Arbeitsorgan die landwirtschaftliche Arbeitsmaschine eine zeitlich begrenzte Einschwingphase durchläuft, wobei in der Anzeigeeinheit die Veränderung eines oder mehrerer Effizienzparameter im Verhältnis zum Wert dieser Effizienzparameter vor der Änderung der Arbeitsparameter visualisiert wird.

Ein qualitativ hochwertiges Optimierungsergebnis wird auch dadurch erreicht, dass die visualisierten Effizienzparameter in der Recheneinheit über funktionale Abhängigkeiten mit den Erntebedingungen verknüpft sind, sodass sich in der Einschwingphase ändernde Erntebedingungen bei der Visualisierung der Effizienzparameter berücksichtigt werden.

Indem der Bediener der landwirtschaftlichen Arbeitsmaschine im folgenden Menüschritt zur qualitativen Beurteilung der Änderung des Qualitätskriteriums und/oder Effizienzparameters aufgefordert wird und/oder dass das Fahrerassistenzsystem die Beurteilung selbsttätig vornimmt und in der Anzeigeeinheit visualisiert wird einerseits sichergestellt, dass der Bediener persönliches Wissen und Beobachtungen in die Optimierung einfließen lassen kann. Zudem erhöht dies die Akzeptanz eines solchen Optimierungssystems beim Bediener.

Eine schnelle und elektronisch gut verarbeitbare Beurteilung des Optimierungsergebnisses wird dann erreicht, wenn die Beurteilung auf die qualitativen Eigenschaften "besser", "schiechter" oder "gleich" beschränkt ist.

Ein sehr effizient arbeitendes Fahrerassistenzsystem ergibt sich dann, wenn bei Ablehnung des Lösungsvorschlages oder bei qualitativer Beurteilung "schiechter" oder "gleich" das Fahrerassistenzsystem die Optimierung eines alternativen Arbeitsparameters vorschlägt. Indem der Vorschlag auf der Analyse von in der Recheneinheit hinterlegtem Expertenwissen basiert, wobei das Expertenwissen die Zusammenhänge verschiedener Effizienzparameter, Qualitätskriterien und Arbeitsparameter der Arbeitsorgane berücksichtigt, kann in extrem kurzer Zeit ein zufriedenstellendes Optimierungsergebnis erzielt werden. Zudem ist es nicht notwenig, dass der Bediener über detailliertes Fachwissen bezüglich diese sehr komplexen Zusammenhänge verfügen muss.

In vorteilhafter Ausgestaltung der Erfindung wird der Bediener der landwirtschaftlichen Arbeitsmaschine im folgenden Menüschritt zur Annahme oder Ablehnung der Optimierung des alternativen Arbeitsparameters aufgefordert, wobei der Bediener der landwirtschaftlichen Arbeitsmaschine durch Bestätigung oder Ablehnung die Optimierung des alternativen Arbeitsparameters bewirkt. Dies hat in analoger Weise den Vorteil, dass der Bediener Herr des Optimierungsverfahrens bleibt.

Häufig führt die Optimierung eines Arbeitsparameters zu Verschlechterung anderer Effizienzparameter und/oder Qualitätskriterien, sodass in einer vorteilhaften Ausgestaltung der Erfindung vorgesehen ist, dass der Vorschlag zur Annahme eines optimierten Arbeitsparameters mit einem Hinweis auf den Einfluss auf einen oder mehrere der weiteren Effizienzparameter und/oder Qualitätskriterien verknüpft sein kann. Auf diese Weise erhält der Bediener bereits vor dem Fällen seiner Entscheidung einen sogenannten Warnhinweise, zu welchen negativen Konsequenzen die Annahme des Vorschlags führen könnte, sodass er eine noch qualifiziertere Entscheidung treffen kann.

Damit der Bediener nach erfolgter Optimierung auch über eine verlässliche Information bezüglich des Optimierungserfolgs verfügt, ist weiter vorgesehen, dass in einem Ergebnismenüschritt das Optimierungsergebnis in der Anzeigeeinheit visualisiert wird.

Ein besonders wirksam kritische Arbeitsweisen einer landwirtschaftlichen Arbeitsmaschine behebendes Fahrerassistenzsystem wird dann geschaffen, wenn die optimierbaren Effizienzparameter "Gutf!uss/Arbeitsbild" und/oder "Kornverlust" und/oder "Überkehr" und/oder "Kornqualität" umfassen. In diesem Zusammenhang wird eine weitere Steigerung des Optimierungseffekts erzielt, wenn
- dem Effizienzparameter "Kornqualität" die Qualitätskriterien "Körnerbruch" und/oder "Entgrannung/Entspeizung" und/oder "Kornsauberkeit"
- dem Effizienzparameter "Überkehr" die Qualitätskriterien "Überkehrmenge" und/oder "Kornmenge in der Überkehr"
- dem Effizienzparameter "Kornveriust" die Qualitätskriterien "Vorsatzkornveriust" und/oder "Abscheidekornveriust" und/oder "Reinigungskornveriust" und/oder "Ausdruschkornveriust"
- dem Effizienzparameter "Gutfiuss/Arbeitsbiid" die Qualitätskriterien "Schneidwerk" und/oder "Schwadabiage" und/oder "Anbaustrohhäcksler" und/oder Häckselgutverteileinrichtung" und/oder "Einzugskanal" und/oder "Dreschwerk" und/oder "Trenneinrichtung" zugeordnet sind.

Ein besonders effizienter Einsatz des Fahrerassistenzsystems ergibt sich dann, wenn der Bediener der landwirtschaftlichen Arbeitsmaschine die kritische Arbeitsweise identifiziert und das Fahrerassistenzsystem aktiviert oder sich das Fahrerassistenzsystem nach Identifizierung einer kritischen Arbeitsweise selbsttätig aktiviert. Eine solche Struktur stellt sicher, dass der Bediener der landwirtschaftlichen Arbeitsmaschine nur dann mit einer Arbeitsparameteroptimierung konfrontiert wird, wenn signifikante Verschlechterungen des Arbeitsergebnisses auftreten.

Indem die Kommunikation zwischen dem Fahrerassistenzsystem und dem Bediener interaktiv und natürlich sprachlich erfolgt, wird zudem sichergestellt, dass der Bediener auch ohne spezielle Vorkenntnisse das Fahrerassistenzsystem effizient nutzen kann.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
Figur 1 eine als Mähdrescher ausgeführte landwirtschaftliche Arbeitsmaschine mit erfindungsgemäßem Fahrerassistenzsystem
Figur 2a-e die Anzeigestruktur des erfindungsgemäßen Fahrerassistenzsystems
Figur 3a-d eine schematische Ablaufstruktur des erfindungsgemäßen Fahrerassistenzsystems

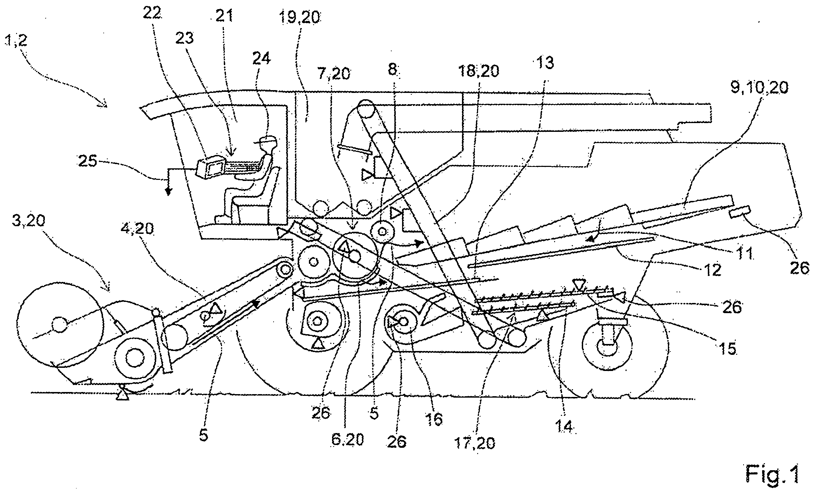

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Hordenschüttler 9 ausgeführte Trenneinrichtung 10 übergeben wird. Auf dem rotierenden Hordenschüttler 9 wird der Gutstrom 5 so gefördert, dass in dem Gutstrom enthaltene freibewegliche Körner 11 im untenseitigen Bereich des Hordenschüttlers 9 abgeschieden werden. Sowohl die am Dreschkorb 6 als auch am Hordenschüttler 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1 über eine Fahrzeugkabine 21 in der zumindest eine mit einer Anzeigeeinheit 22 versehene Steuer- und Regeleinrichtung 23 angeordnet ist, mittels derer automatisch oder vom Bediener 24 der landwirtschaftlichen Arbeitsmaschine 1 initiiert eine Vielzahl von noch näher zu beschreibenden Prozessen gesteuert werden können. Die Steuer- und Regeleinrichtung 23 kommuniziert über ein sogenanntes Bussystem 25 in an sich bekannter Weise mit einer Vielzahl von Sensorsystemen 26. Einzelheiten bezüglich der Struktur der Sensorsysteme 26 sind detailliert in der DE 101 47 733 beschrieben, sodass im Folgenden die Struktur der Sensorsysteme 26 nicht nochmals beschrieben wird.

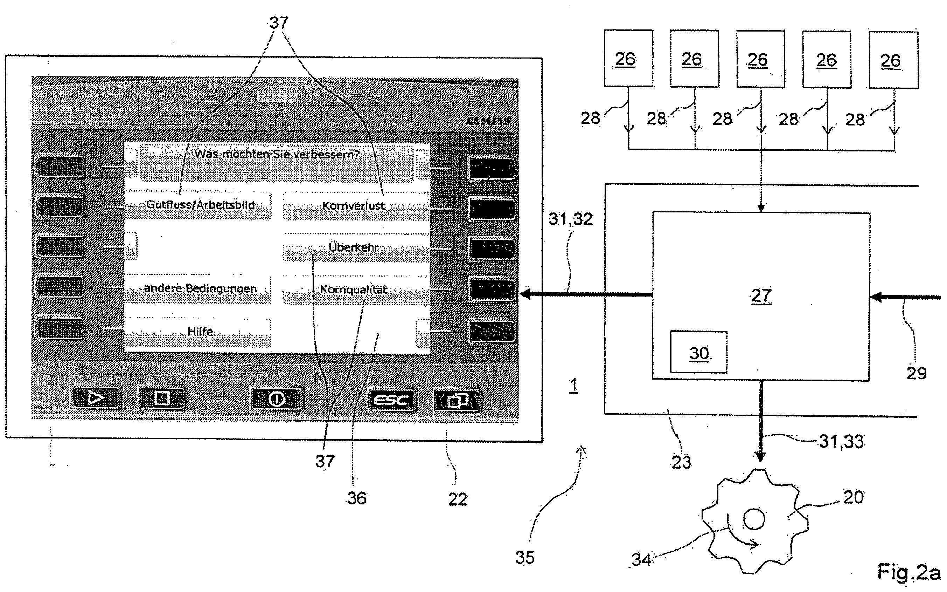

Fig. 2a zeigt eine schematische Darstellung der Anzeigeeinheit 22 der Steuer- und Regeleinrichtung 23 sowie die der Steuer- und Regeleinrichtung 23 zugeordnete und mit der Anzeigeeinheit 22 gekoppelte Recheneinheit 27. Die Recheneinheit 27 ist so beschaffen, dass sie neben den von den Sensorsystemen 26 generierten Informationen 28, externe Informationen 29 und in der Recheneinheit 27 selbst hinterlegte Informationen 30, wie etwa Expertenwissen, zu einer Vielzahl von Ausgangssignalen 31 verarbeiten kann. Die Ausgangssignale 31 sind dabei so beschaffen, dass sie zumindest Anzeigesteuersignale 32 und Arbeitsorgansteuersignale 33 umfassen, wobei erstere die Inhalte der Anzeigeeinheit 22 bestimmen und letztere die Änderung der unterschiedlichsten Arbeitsparameter 34 der Arbeitsorgane 20 der landwirtschaftlichen Arbeitsmaschine 1 bewirken, wobei Pfeil 34 symbolisch für die Dreschtrommeldrehzahl steht. Die Steuer- und Regeleinrichtung 23 mit der ihr zugeordneten Anzeigeeinheit 22 und der Recheneinheit 27 sind Bestandteil des erfindungsgemäßen Fahrerassistenzsystems 35, dessen Anzeigeeinheit 22 in einem Anzeigebereich 36 eine interaktive, natürlichsprachige Kommunikation zwischen dem Bediener 24 und dem Fahrerassistenzsystem 35 zulässt. Das Fahrerassistenzsystem 35 ist dabei so beschaffen, dass es unter Berücksichtigung zumindest einer Auswahl der in der Recheneinheit 27 verfügbaren Informationen 28-30 kritische Arbeitsweisen der landwirtschaftlichen Arbeitsmaschine 1 dadurch überwinden oder abstellen kann, dass es einen oder mehrere Effizienzparameter 37 der landwirtschaftlichen Arbeitsmaschine 1 mittels dieser interaktiven natürlichsprachigen Kommunikation optimiert.

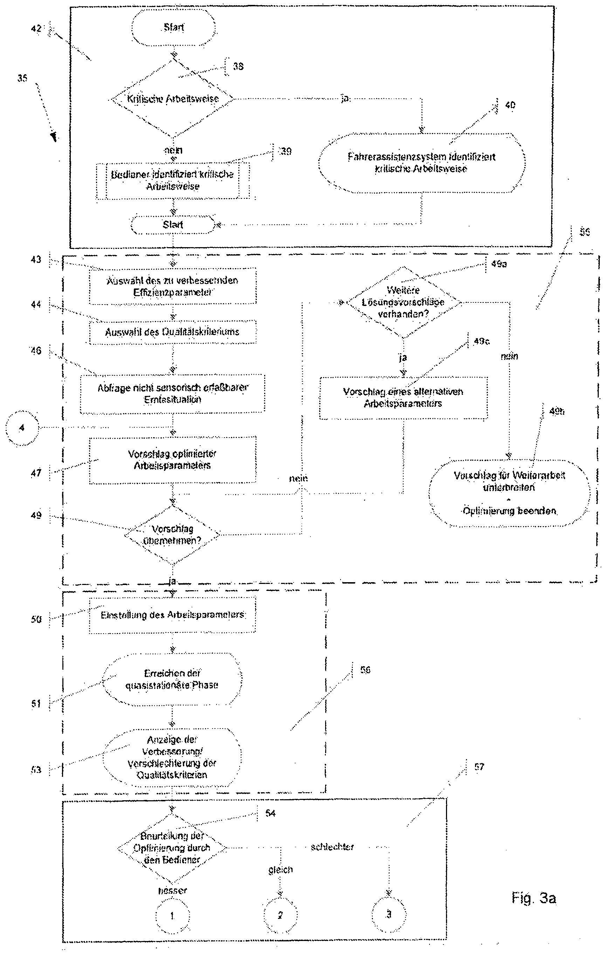

Die erfindungswesentlichen Aspekte dieser interaktiven natürlichsprachigen Kommunikation werden an Hand der in den Figuren 3a-d dargestellten Flussdiagramme sowie unter Einbeziehung der Figuren 2a-d nachfolgend detaillierter beschrieben. Je nachdem, ob die landwirtschaftliche Arbeitsmaschine 1 gemäß Figur 3a, Bezugszeichen 38, über geeignete Sensoren 26 zur Detektion einer kritischen Arbeitsweise der landwirtschaftlichen Arbeitsmaschine 1 verfügt, kann entweder der Bediener 24 die kritische Arbeitsweise identifizieren und das Fahrerassistenzsystem 35 aktivieren, Feld 39, oder das Fahrerassistenzsystem 35 aktiviert sich nach Identifizierung einer kritischen Arbeitsweise selbsttätig, Feld 40. Während dieses ersten Abarbeitungsschrittes 42 werden ein oder mehrere Arbeitsparameter 34 der Arbeitsorgane 20 der landwirtschaftlichen Arbeitsmaschine 1 und/oder Effizienzparameter 37 der landwirtschaftlichen Arbeitsmaschine 1 überwacht. Gemäß Figur 2a umfasst das dargestellte Ausführungsbeispiel die Effizienzparameter 37 "Gutfluss/Arbeitsbild", "Kornveriust", "Überkehr" und "Kornquaiität". Eine kritische Arbeitsweise wird beispielsweise dann identifiziert, wenn zumindest ein Arbeitsparameter 34 und/oder zumindest einer der Effizienzparameter 37 von in der Recheneinheit 27 hinterlegten Sollwertbereichen abweicht oder der Bediener 24 einen Effizienzparameter 37 als nicht zufriedenstellend beurteilt. Kritische Arbeitsweisen eines Mähdreschers 2 liegen typischer Weise immer dann vor, wenn die Abscheide- und Reinigungskornverluste oberhalb eines Sollwertbereiches liegen, die Kornmenge in der Überkehr und das Überkehrvolumen von vorgegebenen Sollwertbereichen abweicht, der Körnerbruch zu hoch oder der Reinheitsgrad der geerntete Kornmenge zu niedrig ist. Die Arbeitsweise eines Mähdreschers 2 kann auch dann als kritisch beurteilt werden, wenn die Drehzahlen der Arbeitsorgane 20 Grenzwerte unterschreiten, die Abscheidekornverluste sehr viel höher als die Reinigungskornverluste oder umgekehrt sind, was auf eine ungleichmäßige Auslastung des Mähdreschers 2 schließen lässt oder wenn der Mähdrescher 2 mit einem zu geringen Erntegutdurchsatz beaufschlagt, ergo einer zu geringen Fahrgeschwindigkeit betrieben wird, was letztlich aufgrund einer Unterschreitung der zulässigen Kornverluste identifizierbar ist.

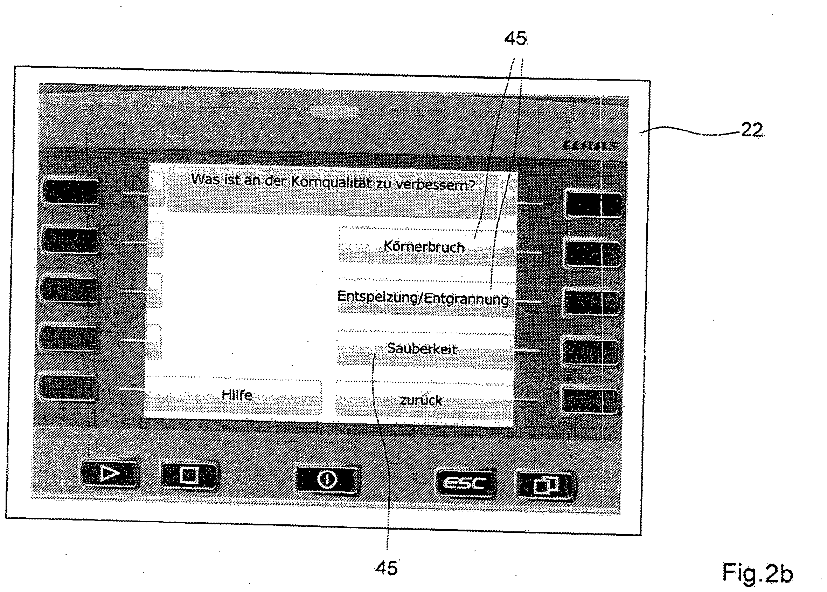

Nachdem im ersten Abarbeitungsschritt 42 die kritische Arbeitsweise identifiziert und das Fahrerassistenzsystem 35 gestartete wurde, wird der Bediener 24 in einem ersten Menüschritt 43 zur Auswahl des zu optimierenden Effizienzparameters 37 aufgefordert. Dies kann beispielsweise in der in Figur 2a dargestellten Weise erfolgen. Schlägt das Fahrerassistenzsystem 35 unmittelbar den zu optimierenden Effizienzparameter 37 vor, kann die Aktion des Bedieners 24 auch auf Bestätigung oder Ablehnung beschränkt sein. Im folgenden Menüschritt 44 wird der Bediener 24 zur Auswahl des zu verbessernden Qualitätskriteriums 45 des im ersten Menüschritt 43 festgelegten Effizienzparameters 37, im in Figur 2a dargestellten Ausführungsbeispiel der Effizienzparameter "Kornquaiität", aufgefordert. Figur 2b zeigt beispielhaft die Struktur der Anzeigeeinheit 22 für Menüschritt 44, wobei dem Effizienzparameter "Kornquaiität" die Qualitätskriterien 45 "Körnerbruch" und/oder "Entgrannung/Entspeizung" und/oder "Kornsauberkeit" zugeordnet sind. In analoger Weise ist die Anzeigeeinheit 22 strukturiert wenn einer der weiteren Effizienzparameter 37 vom Betreiber 24 gewählt oder vom Fahrerassistenzsystem 35 vorgeschlagen wird. Beispielsweise können dem Effizienzparameter "Überkehr" die Qualitätskriterien "Überkehrmenge" und/oder "Kornmenge in der Überkehr", dem Effizienzparameter "Kornverlust" die Qualitätskriterien "Vorsatzkornveriust" und/oder "Abscheidekornveriust" und/oder "Reinigungskornveriust" und/oder "Ausdruschkornveriust" und dem Effizienzparameter "Gutfiuss/Arbeitsbild" die Qualitätskriterien "Schneidwerk" und/oder "Schwadabiage" und/oder "Anbaustrohhäcksier" und/oder Häckselgutverteileinrichtung" und/oder "Einzugskanal" und/oder "Dreschwerk" und/oder "Trenneinrichtung" zugeordnet sein.

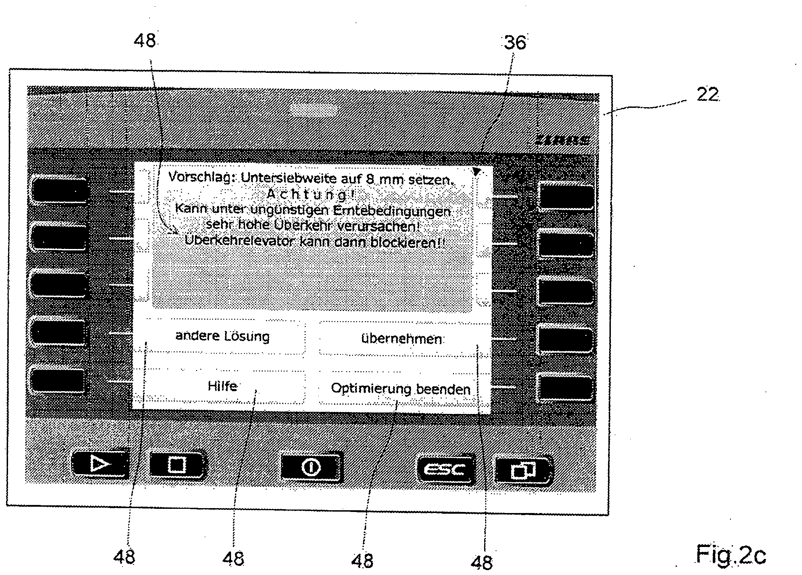

Optional kann nach Auswahl des oder der Qualitätskriterien 45 ein weiterer Menüschritt 46 vorgesehen sein, in welchem das Fahrerassistenzsystem 35 weitere nicht sensorisch erfassbare Erntesituationen, wie etwa stehendes Getreide, Lagergetreide, Unkrautbesatz, abfragt und der Bediener 24 diese Informationen eingeben muss. Nach Abschluss der verschiedenen Eingaben ermittelt das Fahrerassistenzsystem 35 unter Verwendung eines in der Recheneinheit 27 hinterlegten taktischen Lösungsweges in einem nächsten Menüschritt 47 einen optimierten Arbeitsparameter 34 des Arbeitsorgans 20 dessen Einstellungsänderung die vielversprechenste Aussicht auf Verbesserung der Arbeitsweise der landwirtschaftlichen Arbeitsmaschine 1 bietet. Im dargestellten Ausführungsbeispiel wurde für den zu optimierenden Effizienzparameter "Kornqualität" das Qualitätskriterium "Sauberkeit" gewählt. Im Menüschritt 47 weist die Anzeigeeinheit 22 die in Figur 2c dargestellte Struktur auf, wobei im Anzeigebereich 36 nunmehr der optimierte Arbeitsparameter, hier der Vorschlag, die Untersiebweite auf 8 mm zu setzen, natürlichsprachig angezeigt wird. Zudem umfasst der Anzeigebereich 36 ein Hinweisfeld 48 in welchem auf den Einfluss hingewiesen wird, den eine Änderung eines Arbeitsparameters 34 gemäß dem Vorschlag auf einen oder mehrere der weiteren Effizienzparameter 37 haben kann. Neben der hier genannten "Untersiebweite" kommen als optimierbare Arbeitsparameter 34 des Mähdreschers 2 eine Vielzahl von Parametern, wie etwa die Dreschtrommeldrehzahl, die Reinigungsgebläsedrehzahl, die Obersiebweite, die Dreschkorbweite, die Fahrgeschwindigkeit, die Höhe des Vorsatzgerätes über dem Boden, in Betracht. Weiter umfasst die vorzugsweise als Touchscreen ausgeführte Anzeigeeinheit 22 im Menüschritt 47 Aktivierungsfelder 48 durch deren Berührung der Bediener 24 den Vorschlag verwerfen (andere Lösung), übernehmen, die Optimierung beenden oder Hilfe anfordern kann. Übernimmt der Bediener 24 in dem Entscheidungsschritt 49 den Vorschlag, so wird der optimierte Arbeitsparameter 34 in einem weiteren Menüschritt 50 entweder unmittelbar durch das Fahrerassistenzsystem 35 an dem jeweiligen Arbeitsorgan 20 eingestellt oder der Bediener 24 selbst nimmt die Änderung des entsprechenden Arbeitsparameters 34 vor, wobei hier entweder die Aktivierung eines Einstellmechanismus oder die Änderung mittels Werkzeug in Betracht kommt. Verwirft der Bediener 24 den Lösungsvorschlag im Entscheidungsschritt 49, prüft das Fahrerassistenzsystem 35 in einem Zwischenschritt 49a, ob weitere Lösungsvorschläge ermittelbar sind. Ist dies nicht der Fall, wird in einem Zwischenschritt 49b entweder die Optimierung abgebrochen oder das Fahrerassistenzsystem 35 unterbreitet in einem Zwischenschritt 49c einen Vorschlag, gemäß dem in seiner Recheneinheit 27 hinterlegten taktischen Lösungsweg, wie weiter vorgegangen werden kann, um die identifizierte kritische Arbeitsweise des Mähdreschers 2 zu beheben. In diesem Fall schlägt das Fahrerassistenzsystem 35 die Optimierung eines alternativen Arbeitsparameters 34 vor, wobei die Optimierungsprozedur nach diesem neuerlichen Vorschlag mit Entscheidungsschritt 49 fortgesetzt wird. Die Abarbeitung der Menüschritte 43 bis 49 bilden zugleich den zweiten Abarbeitungsschritt 55, bei dem unter Einbeziehung des in der Recheneinheit 27 hinterlegten taktischen Lösungswegs optimierte Arbeitsparameter 34 der Arbeitsorgane 20 des Mähdreschers 2 ermittelt und vorgeschlagen werden.

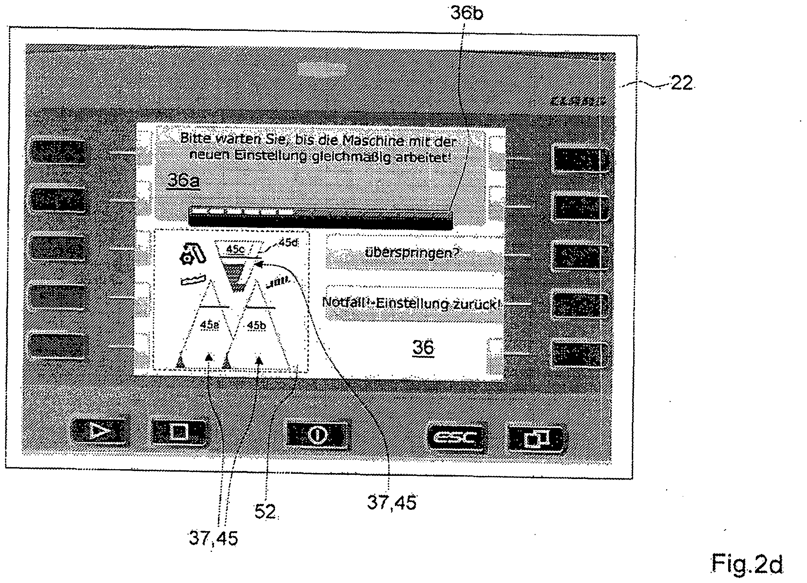

Im nun folgenden dritten Abarbeitungsschritt 56 werden die ermittelten Arbeitsparameter 34 am Mähdrescher 2 eingestellt und der Mähdrescher wird mit diesen Arbeitsparametern betrieben. Nach der Einstellung des optimierten Arbeitsparameters 34 wird dem Bediener 24 des Mähdreschers 2 in einem nächsten Menüschritt 51 die in Fig. 2d dargestellte Struktur der Anzeigeeinheit 22 visualisiert. Im Anzeigebereich 36a wird zunächst darauf hingewiesen, dass die landwirtschaftliche Arbeitsmaschine 1 eine quasistationäre Phase, bei der der Mähdrescher 2 mit den geänderten Arbeitsparametern 34 gleichmäßig arbeitet noch nicht erreicht hat. Es liegt im Rahmen der Erfindung, dass eine Fortschrittsanzeige 36b vorgesehen sein kann, sodass der Bediener 22 informiert ist, wann der quasistationäre Zustand erreicht sein wird. Zudem umfasst der Anzeigebereich 36 nunmehr eine Anzeigefläche 52 für ausgewählte Effizienzparameter 37und/oder Qualitätskriterien 45. Im dargestellten Ausführungsbeispiel sind die Qualitätskriterien "Abscheidekornveriust" 45a, "Reinigungskornveriust" 45b, "Überkehrmenge" 45c und "Kornmenge in der Überkehr" 45d visualisiert. Damit der Bediener 24 einen schnellen Überblick über die Veränderung ausgewählter Effizienzparameter 37 und/oder Qualitätskriterien 45 erlangt, ist deren Visualisierung in besagter Anzeigefläche 52 so strukturiert, dass die Visualisierung des Wertes der Effizienzparameter 37 und/oder Qualitätskriterien 45 vor Änderung des jeweiligen Arbeitsparameters 34 in der Anzeigefläche 52 eingefroren wird, sodass der Bediener 24 über deren Werte stets informiert ist. Zugleich wird die Änderung der visualisierten Effizienzparameter 37 und/oder Qualitätskriterien 45 farblich hervorgehoben, wobei die Farbe "Rot" für Verschlechterung und die Farbe "Grün" für Verbesserung steht, sodass der Bediener 24 einen sofortigen Überblick darüber erhält, ob die identifizierte kritische Arbeitsweise ganz oder teilweise oder gar nicht behoben wurde. Es liegt in diesem Zusammenhang im Rahmen der Erfindung, dass die visualisierten Effizienzparameter 37 und/oder Qualitätskriterien 45 in der Recheneinheit 27 über funktionale Abhängigkeiten mit den Erntebedingungen verknüpft sind, sodass sich in der Einschwingphase ändernde Erntebedingungen bei der Visualisierung der Effizienzparameter 37 und/oder Qualitätskriterien 45 berücksichtigt werden.

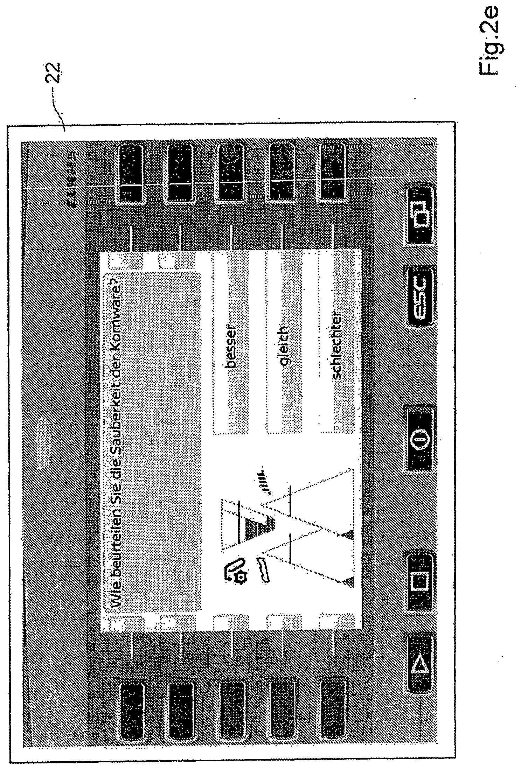

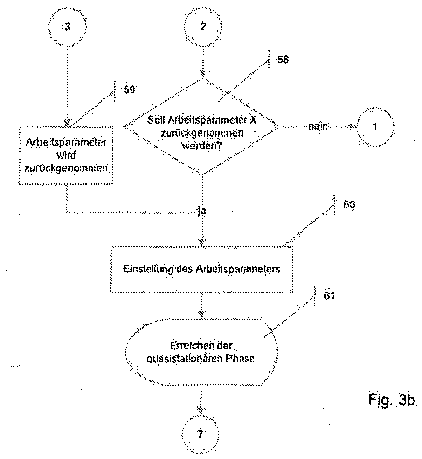

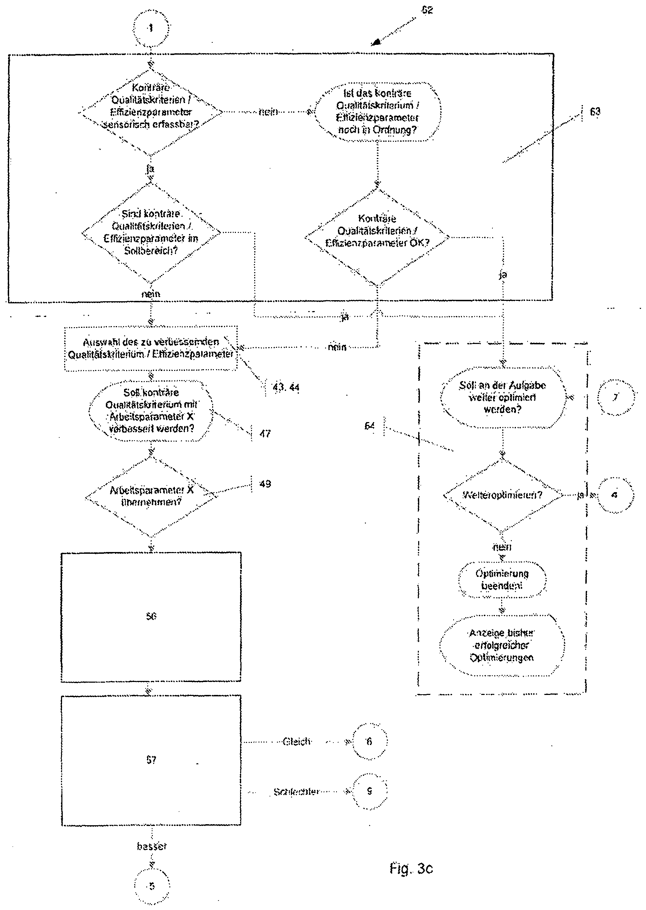

Je nachdem, ob die zu verbessernden Effizienzparameter 37 und/oder Qualitätskriterien 45 sensorisch erfasst werden, kann in einem weiteren Menüschritt 53 die Anzeige der Verbesserung/Verschlechterung in der Anzeigeeinrichtung 22 vorgesehen sein. Entscheidend ist, dass der Bediener 24 im folgenden Menüschritt 54 aufgefordert wird, die Optimierung der Effizienzparameter 37 und/oder Qualitätskriterien 45 qualitativ zu beurteilen, wobei der Bediener 24 gemäß Fig. 2e das Ergebnis der Optimierung mit "besser", "schlechter" oder "gleich" bewerten kann. Die Menüschritte 53 und 54 bilden damit zugleich den vierten, die Beurteilung und Überprüfung der Arbeitsweise der landwirtschaftlichen Arbeitsmaschine 1 umfassenden Abarbeitungsschritt 57 des Fahrerassistenzsystems 35. Bewertet der Bediener das Optimierungsergebnis und damit die Arbeitsweise der landwirtschaftlichen Arbeitsmaschine 1 mit "gleich" oder "schiechter" verfährt das Fahrerassistenzsystem 35 gemäß der in Fig. 3b dargestellten Weise, wobei der Pfad (2) für die Bewertung "gleich" und der Pfad (3) für die Bewertung "schiechter" gilt. Bei Bewertung "gleich" wird der Bediener 24 in einem Menüschritt 58 gefragt, ob die Änderung des Arbeitsparameters 34 rückgängig gemacht werden soll. Lehnt der Betreiber 24 dies ab, geht das Fahrerassistenzsystem 35 in eine weiter unten näher beschriebene Routine zur Überprüfung konträrer Effizienzparameter 37 und/oder Qualitätskriterien 45 über (siehe Pfad (1) und Figur 3c).

Wird die Arbeitsweise nach erfolgter Optimierung mit "schliechter" beurteilt nimmt das Fahrerassistenzsystem in einem Schritt 59 selbsttätig die Änderung des oder der Arbeitsparameter 34 zurück. Je nach Beschaffenheit der landwirtschaftlichen Arbeitsmaschine 1 löst im folgenden Arbeitsschritt 60 das Fahrerassistenzsystem 35 die Rücksetzung des Arbeitsparameters 34 aus oder muss der Bediener die Rücksetzung veranlassen. Hat die landwirtschaftliche Arbeitsmaschine 1 schließlich wieder die quasistationäre Phase erreicht (Arbeitsschritt 61, Fig. 3b) folgt der in Figur 3c dargestellte, später noch näher erläuterte Menüschritt 64. Zur besseren Orientierung wird dieser Übergang in den Figuren 3b und 3c als Pfad (7) bezeichnet. Entscheidet sich der Bediener 24 in Menüschritt 64 für eine Weiteroptimierung beginnt der Optimierungsprozess wieder bei dem in Fig. 3a dargestellten Menüschritt 47 (siehe Pfad (4)), nämlich der Optimierung eines alternativen Arbeitsparameters 34. Wie bereits beschrieben basiert der alternative Vorschlag auf einem in der Recheneinheit 27 hinterlegten taktischem Lösungsweg, dessen wesentlicher Bestandteil die Analyse von in der Recheneinheit 27 hinterlegtem Expertenwissen ist, wobei das Expertenwissen die Zusammenhänge verschiedener Effizienzparameter 37, Qualitätskriterien 45 und Arbeitsparameter 34 der Arbeitsorgane 20 berücksichtigt. Sodann schließen sich die bereits beschriebenen Abarbeitungsschritte 55, 56 in der bereits beschriebenen Weise an. Auch der ermittelte alternative Arbeitsparameter 34 muss vom Bediener 24 angenommen oder abgelehnt werden, wobei durch die Bestätigung oder Ablehnung die Optimierung des alternativen Arbeitsparameters 34 bewirkt wird.

Aufgrund der komplexen Zusammenhänge zwischen verschiedenen Effizienzparametern 37, Qualitätskriterien 45 und Arbeitsparametern 34 ist das erfindungsgemäße Fahrerassistenzsystem 35 so strukturiert, dass es gemäß Fig. 3c ein Untermenü 62 zur Überprüfung konträrer Effizienzparameter 37 und/oder Qualitätskriterien 45 umfasst. Beispielsweise stellt der Reinigungskornverlust ein konträres Qualitätskriterium zur Erhöhung der Drehzahl des Reinigungsgebläses 16 zwecks Verbesserung der Kornreinheit dar, da mit zunehmender Luftströmung in der Reinigungseinrichtung 17 die Gefahr des Ausblasens von Körnern aus der Reinigungseinrichtung 17 zunimmt, was letztlich zu einer Verschlechterung des Effizienzparameters "Kornveriust" führt. In einem ersten Menüschritt 63 werden in Analogie zu dem bereits beschriebenen ersten Abarbeitungsschritt 42 (Fig. 3a) entweder vom Bediener 24 oder für den Fall, dass geeignete Sensoren 26 zur Erfassung der konträren Effizienzparameter 37 und/oder Qualitätskriterien 45 vorhanden sind von dem Fahrerassistenzsystems 35 selbst die konträren Effizienzparameter 37 und/oder Qualitätskriterien 45 überprüft. Wird keine Abweichung eines konträren Effizienzparameter 37 und/oder Qualitätskriterien 45 identifiziert, kann der Bediener 24 durch entsprechende Eingaben die Optimierung der Arbeitsparameter 34 gemäß Menüschritt 64 entweder beendet oder weiterführen, wobei die Weiterführung zur wiederholten Abarbeitung der Menüschritte 43 bis 54 führt (siehe Pfad (4)). Wird hingegen eine unzulässige Abweichung der konträren Effizienzparameter 37 und/oder Qualitätskriterien 45 von hinterlegten Sollwertbereichen identifiziert, mündet Menüschritt 63 in analoger Weise in den Menüschritten 43, 44, 47, 49 des bereits beschriebenen zweiten Arbeitsschritts 55, an den sich dann die ebenfalls bereits beschriebenen dritten und vierten Arbeitschritte 56, 57 anschließen, sodass auch die Menüroutine 62 im Ergebnis zu optimierten Arbeitsparametern 34 führt, die identifizierte kritische Arbeitsweisen der landwirtschaftlichen Arbeitsmaschine 1 überwindet.

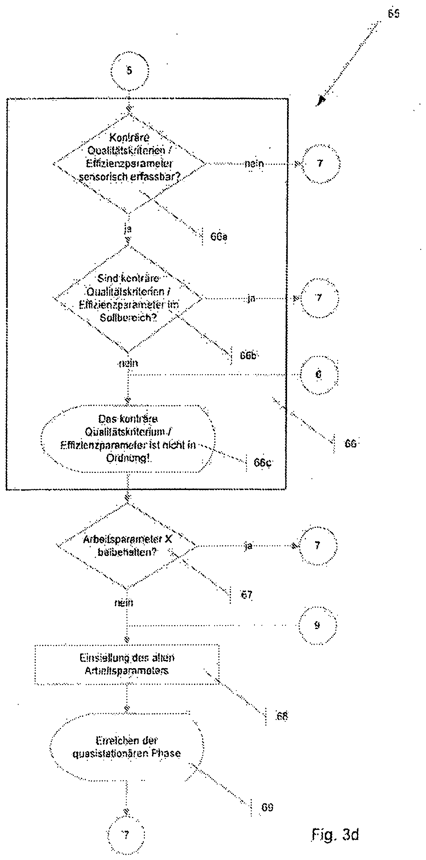

Hat die Optimierung des konträren Effizienzparameters 37 und/oder Qualitätskriteriums 45 zwar zu einer Verbesserung der Arbeitsweise der landwirtschaftlichen Arbeitsmaschine 1 geführt, reicht diese Verbesserung jedoch nicht aus, um die optimierten Effizienzparameter 37 und/oder Qualitätskriterien 45 in die hinterlegten zulässigen Bereiche zu überführen kann sich gemäß Figur 3d eine weitere Optimierungsroutine 65 an das Untermenü 62 anschließen. In den Figuren 3c und 3d ist dieser Übergang als Pfad (5) beschrieben. In einer Abfrageroutine 66 wird zunächst wieder geklärt, ob die konträren Effizienzparameter 37 und/oder Qualitätskriterien 45 sensorisch erfassbar sind (Schritt 66a). Falls dies nicht möglich ist, wird gemäß Pfad (7) mit dem in Figur 3c dargestellten Menüschritt 64, nämlich der Abfrage, ob weiter optimiert werden soll, fortgefahren. Ist die sensorische Erfassung möglich, wird in einem weiteren Schritt 66b abgefragt, ob die Effizienzparameter 37 und/oder Qualitätskriterien 45 bereits in den entsprechenden Sollbereichen liegen. Ist dies der Fall wird die Optimierung gemäß Pfad (7) mit dem in Figur 3c dargestellten Menüschritt 64, nämlich der Abfrage, ob weiter optimiert werden soll, fortgesetzt. Liegen die optimierten Effizienzparameter 37 und/oder Qualitätskriterien 45 nicht im Sollbereich, wird dies dem Bediener 24 in einem weiteren Schritt 66c mitgeteilt. In einem Entscheidungsschritt 67 muss der Bediener 24 entscheiden, ob der eingestellte Arbeitsparameter 34 beibehalten oder verworfen werden soll. Soll der Arbeitsparameter 34 beibehalten werden, wird die Optimierung gemäß Pfad (7) mit dem in Figur 3c dargestellten Menüschritt 64, nämlich der Abfrage, ob weiter optimiert werden soll, fortgesetzt. Soll der Arbeitsparameter 34 nicht beibehalten werden, wird dieser in einem weiteren Arbeitsschritt 68 zurückgesetzt, wobei dies entweder selbsttätig durch das Fahrerassistenzsystem 35 oder durch den Bediener 24 bewirkt wird. Nach der Rücksetzung des Arbeitsparameters 34 wird zunächst in einem weiteren Menüschritt 69 in der bereits beschriebenen Weise das Erreichen der quasistationären Phase des Mähdreschers 2 visualisiert, bevor das Fahrerassistenzsystem 35 gemäß Pfad (7) in Menüschritt 64 die Weiterführung der Optimierung abfragt.

Wird mittels dem in Figur 3c schematisch dargestellten Untermenü 62 nur ein gleichwertiges Optimierungsergebnis erzielt, geht das Fahrerassistenzsystem 35 gemäß dem eingezeichneten Pfad (6) unmittelbar in die Abfrageroutine 66 der weiteren Optimierungsmenüs 65 über, wobei der Bediener 24 unmittelbar den ermittelten Arbeitsparameter annehmen oder ablehnen muss. Tritt nach Abarbeitung des Untermenüs 62 eine Verschlechterung des Optimierungsergebnisses ein, geht das Fahrerassistenzsystem 35 gemäß dem angegebenen Pfad (9) unmittelbar in den Menüschritt 68 der weiteren Optimierungsroutine 65, die Rücksetzung des Arbeitsparameters 34, über.

### Bezugszeichenliste:

- 1: Landwirtschaftliche Arbeitsmaschine
- 2: Mähdrescher
- 3: Getreideschneidwerk
- 4: Schrägförderer
- 5: Erntegutstrom
- 6: Dreschkorb
- 7: Dreschorgan
- 8: Umlenktrommel
- 9: Hordenschüttler
- 10: Trenneinrichtung
- 11: Körner
- 12: Rücklaufboden
- 13: Zuführboden
- 14: Siebebene
- 15: Siebebene
- 16: Gebläse
- 17: Reinigungseinrichtung
- 18: Elevator
- 19: Korntank
- 20: Arbeitsorgan
- 21: Fahrzeugkabine
- 22: Anzeigeeinheit
- 23: Steuer- und Regeleinrichtung
- 24: Bediener
- 25: Bussystem
- 26: Sensorsystem
- 27: Recheneinheit
- 28: Interne Information
- 29: Externe Information
- 30: Information
- 31: Ausgangssignal
- 32: Anzeigesignal
- 33: Arbeitsorgansignal
- 34: Arbeitsparameter
- 35: Fahrerassistenzsystem
- 36: Anzeigebereich
- 37: Effizienzparameter
- 38: Zustandbeschreibung
- 39-40: Felder im Flussdiagramm
- 42: Erster Abarbeitungsschritt
- 43,44: Menüschritt
- 45: Qualitätskriterium
- 46,47: Menüschritt
- 48: Aktivierungsfeld
- 49: Entscheidungsschritt
- 50,51: Menüschritt
- 52: Anzeigefläche
- 53,54: Menüschritt
- 55: Zweiter Abarbeitungsschritt
- 56: Dritter Abarbeitungsschritt
- 57: Vierter Abarbeitungsschritt
- 58,59: Menüschritt
- 60,61: Arbeitschritt
- 62: Untermenü
- 63,64: Menüschritt
- 65: Optimierungsroutine
- 66: Abfrageroutine
- 67: Entscheidungsschritt
- 68: Arbeitsschritt
- 69: Menüschritt

## Patentansprüche

1. Verfahren zum Betreiben eines Fahrerassistenzsystems zur Optimierung von Effizienzparametern und Qualitätskriterien einer, eine Vielzahl von Arbeitsorgane umfassenden landwirtschaftlichen Arbeitsmaschine, insbesondere Mähdrescher, eine Recheneinheit und zumindest eine Anzeigeeinheit (22), aufweisend, wobei die Recheneinheit von maschineninternen Sensorsystemen generierte Informationen, externe Informationen und in der Recheneinheit hinterlegbare Informationen verarbeiten kann, und das Fahrerassistenzsystems (35) unter Berücksichtigung zumindest einer Auswahl der verfügbaren Informationen (28-30) kritische Arbeitsweisen der landwirtschaftlichen Arbeitsmaschine (1) überwindet,
**dadurch gekennzeichnet, dass** die Verarbeitung der verfügbaren Informationen (28-30) die Schritte
a) Analysieren der Arbeitsweise der landwirtschaftlichen Arbeitsmaschine (1) und Identifikation einer kritischen Arbeitsweise ,
b) Abarbeitung eines in der Recheneinheit (27) hinterlegten taktischen Lösungswegs zur Überwindung der kritischen Arbeitsweise der landwirtschaftlichen Arbeitsmaschine (1) in der Weise, dass optimierte Arbeitsparameter (34) eines oder mehrerer Arbeitsorgane (20) vorgeschlagen werden, wobei der Bediener (24) der landwirtschaftlichen Arbeitsmaschine (1) in einem ersten Menüschritt (43) zur Auswahl des zu optimierenden Effizienzparameters (37) aufgefordert wird und im folgenden Menüschritt (44) zur Auswahl des zu verbessernden Qualitätskriteriums (45) des im ersten Menüschritt (43) festgelegten Effizienzparameters (37) aufgefordert wird,
c) selbsttätige oder vom Bediener (24) vorgenommene Einstellung der in Schritt b.) generierten optimierten Arbeitsparameter (34) an einem oder mehreren Arbeitsorganen (20) der landwirtschaftlichen Arbeitsmaschine (1) sowie Betreiben der landwirtschaftlichen Arbeitsmaschine (1) mit den optimierten Arbeitsparametern (34) und,
d) Beurteilung und Überprüfung der Arbeitsweise der landwirtschaftlichen Arbeitsmaschine (1) nach erfolgter Einstellung der optimierten Arbeitsparameter (34) an dem zumindest einen Arbeitsorgan (20) umfasst,
e) und wobei die Effizienzparameter (37) der landwirtschaftlichen Arbeitsmaschine (1) mittels interaktiver natürlichsprachiger Kommunikation zwischen dem Bediener (24) der landwirtschaftlichen Arbeitsmaschine (1) und dem Fahrerassistenzsystem (35) optimiert werden.

2. Verfahren zum Betreiben eines Fahrassistenzsystems, nach Anspruch 1,
**dadurch gekennzeichnet,**
**dass** nach Abarbeitung des Schritts d.) in einem Schritt e.) die Beurteilung und Überprüfung konträrer Effizienzparameter (37) und/oder Qualitätskriterien (45) durchgeführt wird.

3. Verfahren zum Betreiben eines Fahrerassistenzsystems nach Anspruch 2,
**dadurch gekennzeichnet,**
**dass** der Bediener (24) der landwirtschaftlichen Arbeitsmaschine (1) die Rücksetzung des optimierten Arbeitsparameters (34) bewirken kann, wenn ein oder mehrere konträre Effizienzparameter (37) und/ oder Qualitätskriterien (45) außerhalb der zulässigen Wertebereiche liegen.

4. Verfahren zum Betreiben eines Fahrerassistenzsystems nach einem der vorhergehenden Ansprüchen,
**dadurch gekennzeichnet,**
**dass** in Schritt a.) zumindest Arbeitsparameter (34) der Arbeitsorgane (20) der landwirtschaftlichen Arbeitsmaschine (1) und/oder Effizienzparameter (37) der landwirtschaftlichen Arbeitsmaschine (1) überwachtwerden und wobei eine kritische Arbeitsweise dann identifiziert wird, wenn zumindest ein Arbeitsparameter (34) und/oder zumindest ein Effizienzparameter (37) von in der Recheneinheit (27) hinterlegten Sollwertbereichen abweicht oder der Bediener (24) einen Effizienzparameter (37) als nicht zufriedenstellend beurteilt.

5. Verfahren zum Betreiben eines Fahrerassistenzsystems nach einem der vorhergehenden Ansprüche,
**dadurch gekennzeichnet,**
**dass** das Fahrerassistenzsystem (35) in Abhängigkeit von den vom Bediener (24) der landwirtschaftlichen Arbeitsmaschine (1) definierten Effizienzparametern (37) und zugehörigen Qualitätskriterien (45) einen optimierten Arbeitsparameter (34) für zumindest ein Arbeitsorgan (20) vorschlägt und wobei der Bediener (24) der landwirtschaftlichen Arbeitsmaschine (1) durch Bestätigung oder Ablehnung die Einstellung des optimierten Arbeitsparameters (37) an dem zumindest einen Arbeitsorgan (20) bewirkt.

6. Verfahren zum Betreiben eines Fahrerassistenzsystems nach Anspruch 5,
**dadurch gekennzeichnet,**
**dass** nach Bestätigung der Einstellung des optimierten Arbeitsparameters (34) an dem zumindesteinen Arbeitsorgan (20) die landwirtschaftliche Arbeitsmaschine (1) eine zeitlich begrenzte Einschwingphase durchläuft, wobei in der Anzeigeeinheit (22) die Veränderung eines oder mehrerer Effizienzparameter (37) und/oder Qualitätskriterien (45) im Verhältnis zum Wert dieser Effizienzparameter (37) und/oder Qualitätskriterien (45) vor der Änderung der Arbeits-parameter (34) visualisiert wird.

7. Verfahren zum Betreiben eines Fahrerassistenzsystems nach Anspruch 6,
**dadurch gekennzeichnet,**
**dass** die visualisierten Effizienzparameter (37) und/oder Qualitätskriterien (45) in der Recheneinheit (27) über funktionale Abhängigkeiten mit den Erntebedingungen verknüpft sind, sodass sich in der Einschwingphase ändernde Erntebedingungen bei der Visualisierung der Effizienzparameter (37) und/oder Qualitätskriterien (45) berücksichtigt werden.

8. Verfahren zum Betreiben eines Fahrerassistenzsystems nach zumindest einem der Ansprüche 6 und 7,
**dadurch gekennzeichnet,**
**dass** der Bediener (24) der landwirtschaftlichen Arbeitsmaschine (1) im folgenden Menüschritt (54) zur qualitativen Beurteilung der Änderung des Effizienzparameters (37) und/oder des Qualitätskriteriums (45) aufgefordert wird und/oder dass das Fahrerassistenzsystem (35) die Beurteilung selbsttätig vornimmt und in der Anzeigeeinheit (22) visualisiert.

9. Verfahren zum Betreiben eines Fahrerassistenzsystems nach Anspruch 8,
**dadurch gekennzeichnet,**
**dass** die qualitative Beurteilung auf "besser", "schlechter" oder "gleich" beschränkt ist.

10. Verfahren zum Betreiben eines Fahrerassistenzsystems nach Anspruch 9,
**dadurch gekennzeichnet,**
**dass** bei Ablehnung des Lösungsvorschlages oder bei qualitativer Beurteilung "schlechter" oder "gleich" das Fahrerassistenzsystem (35) die Optimierung eines alternativen Arbeitsparameters (34) vorschlägt, wobei
der Vorschlag auf der Analyse von in der Recheneinheit (27) hinterlegtem Expertenwissen basiert und das Expertenwissen die Zusammenhänge zwischen verschiedenen Effizienzparametern (37), Qualitätskriterien (45) und Arbeitsparametern (34) der Arbeitsorgane (20) berücksichtigt.

11. Verfahren zum Betreiben eines Fahrerassistenzsystems nach Anspruch 6,
**dadurch gekennzeichnet,**
**dass** der Bediener (24) der landwirtschaftlichen Arbeitsmaschine (1) in einem weiteren Menüschritt (49) zur Annahme oder Ablehnung der Optimierung des alternativen Arbeitsparameters (34) aufgefordert wird und wobei der Bediener (24) der landwirtschaftlichen Arbeitsmaschine (1) durch Bestätigung oder Ablehnung die Optimierung des alternativen Arbeitsparameters (34) bewirkt.

12. Verfahren zum Betreiben eines Fahrerassistenzsystems nach Anspruch 11,
**dadurch gekennzeichnet,**
**dass** der Vorschlag zur Annahme eines optimierten Arbeitsparameters (34) mit einem Hinweis auf den Einfluss auf einen oder mehrere der weiteren Effizienzparameter (37) und/oder Qualitätskriterien (45) verknüpft sein kann.

13. Verfahren zum Betreiben eines Fahrerassistenzsystems nach einem der vorhergehenden Ansprüche,
**dadurch gekennzeichnet,**
**dass** in einem Ergebnismenüschritt das Optimierungsergebnis in der Anzeigeeinheit (22) visualisiert wird.

14. Verfahren zum Betreiben eines Fahrerassistenzsystems nach einem der vorhergehenden Ansprüche,
**dadurch gekennzeichnet,**
**dass** die verfügbaren Effzienzparameter (37) "Gutfluss/Arbeitsbild" und/oder "Kornverlust" und/oder "Überkehr" und/oder "Kornqualität" umfassen, wobei dem Effizienzparameter (37) "Kornqualität" die Qualitätskriterien (45) "Körnerbruch" und/oder "Entgrannung/Entspelzung" und/oder "Kornsauberkeit", dem Effizienzparameter (37) "Überkehr" die Qualitätskriterien (45) "Überkehrmenge" und/oder "Kornmenge in der Überkehr",
dem Effizienzparameter (37) "Kornverlust" die Qualitätskriterien (45) "Vorsatzkornverlust" und/oder "Abscheidekornverlust" und/oder "Reinigungskornverlust" und/oder "Ausdruschkornverlust" und. dem Effizienzparameter (37) "Gutfluss/Arbeitsbild" die Qualitätskriterien (45) "Schneidwerk" und/oder "Schwadablage" und/oder "Anbaustrohhäcksler" und/oder Häckselgutverteileinrichtung" und/oder "Einzugskanal" und/oder "Dreschwerk" und/oder "Trenneinrichtung" zugeordnet sind.

15. Verfahren zum Betreiben eines Fahrerassistenzsystems nach einem der vorhergehenden Ansprüche,
**dadurch gekennzeichnet,**
**dass** die Effizienzparameter (37) der landwirtschaftlichen Arbeitsmaschine (1) mittels interaktiver natürlichsprachiger Kommunikation zwischen dem Bediener (24) der landwirtschaftlichen Arbeitsmaschine (1) und dem Fahrerassistenzsystem (35) optimiert werden und dass der Bediener (24) der landwirtschaftlichen Arbeitsmaschine (1) die kritische Arbeitsweise identifiziert und das Fahrerassistenzsystem (35) aktiviert oder dass sich das Fahrerassistenzsystem (35) nach Identifizierung einer kritischen Arbeitsweise selbsttätig aktiviert.

16. Vorrichtung zur Durchführung des Verfahrens zum Betreiben eines Fahrerassistenzsystems nach zumindest einem der vorhergehenden Ansprüche.

## Claims

1. A method of operating a driver assistance system for optimising efficiency parameters and quality criteria of an agricultural working machine including a plurality of working members, in particular a combine harvester, having a computing unit and at least one display unit, wherein the computing unit can process items of information generated by machine-internal sensor systems, items of external information and items of information which can be stored in the computing unit, and the driver assistance system (35) overcomes critical modes of operation of the agricultural working machine (1), having regard to at least a selection of the available items of information (28-30), **characterised in that** processing of the available items of information (28-30) includes the steps:
a) analysing the mode of operation of the agricultural working machine (1) and identifying a critical mode of operation,
b) implementing a tactical solution path stored in the computing unit (27) for overcoming the critical mode of operation of the agricultural working machine (1) in such a way that optimised working parameters (34) of one or more working members (20) are proposed, wherein the operator (24) of the agricultural working machine (1) is prompted in a first menu step (43) to select the efficiency parameter (37) to be optimised and the operator (24) is prompted in the following menu step (44) to select the quality criterion (45) to be improved of the efficiency parameter (37) set forth in the first menu step (43)
c) automatic setting or setting effected by the operator (24) of the optimised working parameters (34) generated in step b) at one or more working members (20) of the agricultural working machine (1) and operating the agricultural working machine (1) with the optimised working parameters (34), and
d) assessment and checking of the mode of operation of the agricultural working machine (1) after setting has been effected in respect of the optimised working parameters (34) at the at least one working member (20)
e) and wherein the efficiency parameters (37) of the agricultural working machine (1) are optimised by means of interactive natural-language communication between the operator (24 of the agricultural working machine (1) and the the driver assistance system (35).

2. A method of operating a driver assistance system according to claim 1 **characterised in that** after execution of step d) in a step e) assessment and checking of contrary efficiency parameters (37) and/or quality criteria (45) is effected.

3. A method of operating a driver assistance system according to claim 2 **characterised in that** the operator (24) of the agricultural working machine (1) can cause resetting of the optimised working parameter (34) if one or more contrary efficiency parameters (37) and/or quality criteria (45) lie outside the permissible ranges of values.

4. A method of operating a driver assistance system according to one of the preceding claims **characterised in that** in step a) at least working parameters (34) of the working members (20) of the agricultural working machine (1) and/or efficiency parameters (37) of the agricultural working machine (1) are monitored and wherein a critical mode of operation is identified when at least one working parameter (34) and/or at least one efficiency parameter (37) deviates from target value ranges stored in the computing unit (27) or the operator (24) assesses an efficiency parameter (37) as being unsatisfactory.

5. A method of operating a driver assistance system according to one of the preceding claims **characterised in that** the driver assistance system (35) proposes an optimised working parameter (34) for at least one working member (20) in dependence on the efficiency parameters (37) defined by the operator (24) of the agricultural working machine (1) and associated quality criteria (45) and wherein the operator (24) of the agricultural working machine (1) by confirmation or rejection provides for setting the optimised working parameter (37) at the at least one working member (20).

6. A method of operating a driver assistance system according to claim 5 **characterised in that** after confirmation of the setting of the optimised working parameter (34) at the at least one working member (20) the agricultural working machine (1) passes through a time-limited settling-in phase, wherein the change in one or more efficiency parameters (37) and/or quality criteria (45) in relation to the value of said efficiency parameters (37) and/or quality criteria (45) before the change in the working parameters (34) is displayed in the display unit (22).

7. A method of operating a driver assistance system according to claim 6 **characterised in that** the displayed efficiency parameters (37) and/or quality criteria (45) are linked to the crop conditions in the computing unit (27) by way of functional dependencies so that crop conditions which change in the settling-in phase are taken into consideration in the display of the efficiency parameters (37) and/or quality criteria (45).

8. A method of operating a driver assistance system according to at least one of claims 6 and 7 **characterised in that** the operator (24) of the agricultural working machine (1) is prompted in the following menu step (54) to qualitatively assess the change in the efficiency parameter (37) and/or the quality criterion (45) and/or that the driver assistance system (35) automatically implements the assessment and displays it in the display unit (22).

9. A method of operating a driver assistance system according to claim 8 **characterised in that** the qualitative assessment is limited to 'better', 'worse' or 'the same'.

10. A method of operating a driver assistance system according to claim 9 **characterised in that** when the proposed solution is rejected or upon a qualitative assessment of 'worse' or 'the same' the driver assistance system (35) proposes optimisation of an alternative working parameter (34), wherein the proposal is based on analysis of expert knowledge stored in the computing unit (27) and the expert knowledge takes account of the relationships between various efficiency parameters (37), quality criteria (45) and working parameters (34) of the working members (20).

11. A method of operating a driver assistance system according to claim 6 **characterised in that** the operator (24) of the agricultural working machine (1) is prompted in a further menu step (49) to accept or reject optimisation of the alternative working parameter (34) and wherein the operator (24) of the agricultural working machine (1) by confirmation or rejection causes optimisation of the alternative working parameter (34).

12. A method of operating a driver assistance system according to claim 11 **characterised in that** the proposal for accepting an optimised working parameter (34) can be linked to a reference to the influence on one or more of the further efficiency parameters (37) and/or quality criteria (45).

13. A method of operating a driver assistance system according to one of the preceding claims **characterised in that** the optimisation result is displayed in the display unit (22) in a result menu step.

14. A method of operating a driver assistance according to one of the preceding claims **characterised in that**
the available efficiency parameters (37) include 'material flow/work pattern' and/or 'grain loss' and/or 'tailings' and/or 'grain quality', wherein
associated with the efficiency parameter (37) 'grain quality' are the quality criteria (45) 'broken grain' and/or 'deawning/dehusking' and/or 'grain cleanliness',
associated with the efficiency parameter (37) 'tailings' are the quality criteria (45) 'tailings amount' and/or 'grain amount in the tailings',
associated with the efficiency parameter (37) 'grain loss' are the quality criteria (45) 'front-mounted implement grain loss' and/or 'separation grain loss' and/or 'cleaning grain loss' and/or 'threshing grain loss', and
associated with the efficiency parameter (37) 'material flow/work pattern' are the quality criteria (45) 'cutting mechanism' and/or 'swathe deposit' and/or 'attachment straw chopper' and/or 'chopped material distributor device' and/or 'intake passage' and/or 'threshing mechanism' and/or 'separating device'.

15. A method of operating a driver assistance system according to one of the preceding claims **characterised in that** the efficiency parameters (37) and/or quality criteria (45) of the agricultural working machine (1) are optimised by means of interactive natural-language communication between the operator (24) of the agricultural working machine (1) and the driver assistance system (35) and the operator (24) of the agricultural working machine identifies the critical mode of operation and activates the driver assistance system (35) or the driver assistance system (35) is automatically activated after identification of a critical mode of operation.

16. Apparatus for carrying out the method of operating a driver assistance system according to at least one of the preceding claims.

## Revendications

1. Procédé d'utilisation d'un système d'assistance à la conduite permettant d'optimiser des paramètres d'efficacité et des critères de qualité d'une machine de travail agricole comprenant une pluralité d'organes de travail, en particulier d'une moissonneuse-batteuse, qui présente une unité de calcul et au moins une unité d'affichage (22), l'unité de calcul étant apte à traiter des informations générées par des systèmes de capteurs internes de la machine, des informations externes et des informations pouvant être stockées dans l'unité de calcul, et le système d'assistance à la conduite (35) surmontant des modes de fonctionnement critiques de la machine de travail agricole (1) en tenant compte d'au moins une sélection des informations disponibles (28-30), **caractérisé en ce que** le traitement des informations disponibles (28-30) comprend les étapes suivantes :
a) analyse du mode de fonctionnement de la machine de travail agricole (1) et identification d'un mode de fonctionnement critique,
b) exécution d'un programme de solution tactique stocké dans l'unité de calcul (27) pour surmonter le mode de fonctionnement critique de la machine de travail agricole (1), de façon à proposer des paramètres de fonctionnement optimisés (34) d'un ou plusieurs organes de travail (20), l'opérateur (24) de la machine de travail agricole (1) étant invité, dans une première étape de menu (43), à sélectionner le paramètre d'efficacité (37) à optimiser et, dans l'étape de menu suivante (44), à sélectionner le critère de qualité (45) à améliorer du paramètre d'efficacité (37) défini dans la première étape de menu (43),
c) réglage automatique ou par l'opérateur (24) des paramètres de fonctionnement optimisés (34) générés à l'étape b.) sur un ou plusieurs organes de travail (20) de la machine de travail agricole (1) ainsi qu'utilisation de la machine de travail agricole (1) avec les paramètres de fonctionnement optimisés (34) et
d) évaluation et vérification du mode de fonctionnement de la machine de travail agricole (1) après réglage des paramètres de fonctionnement optimisés (34) sur ledit au moins un organe de travail (20),
e) et les paramètres d'efficacité (37) de la machine de travail agricole (1) étant optimisés au moyen d'une communication interactive en langage naturel entre l'opérateur (24) de la machine de travail agricole (1) et le système d'assistance à la conduite (35)

2. Procédé d'utilisation d'un système d'assistance à la conduite selon la revendication 1, **caractérisé en ce que**, après exécution de l'étape d.), l'évaluation et la vérification de paramètres d'efficacité (37) et/ou critères de qualité (45) contraires sont effectuées dans une étape e.).

3. Procédé d'utilisation d'un système d'assistance à la conduite selon la revendication 2, **caractérisé en ce que** l'opérateur (24) de la machine de travail agricole (1) peut provoquer la réinitialisation du paramètre de fonctionnement optimisé (34) si un ou plusieurs paramètres d'efficacité (37) et/ou critères de qualité (45) contraires se situent en dehors des plages de valeurs admissibles.

4. Procédé d'utilisation d'un système d'assistance à la conduite selon une des revendications précédentes, **caractérisé en ce que**, à l'étape a.), au moins des paramètres de fonctionnement (34) des organes de travail (20) de la machine de travail agricole (1) et/ou des paramètres d'efficacité (37) de la machine de travail agricole (1) sont surveillés et un mode de fonctionnement critique est identifié lorsqu'au moins un paramètre de fonctionnement (34) et/ou au moins un paramètre d'efficacité (37) s'écarte de plages de valeurs de consigne stockées dans l'unité de calcul (27) ou que l'opérateur (24) juge un paramètre d'efficacité (37) insatisfaisant.

5. Procédé d'utilisation d'un système d'assistance à la conduite selon une des revendications précédentes, **caractérisé en ce que** le système d'assistance à la conduite (35) propose un paramètre de fonctionnement optimisé (34) pour au moins un organe de travail (20) en fonction des paramètres d'efficacité (37) définis par l'opérateur (24) de la machine de travail agricole (1) et de critères de qualité (45) associés, l'opérateur (24) de la machine de travail agricole (1) provoquant par confirmation ou refus le réglage du paramètre de fonctionnement optimisé (37) sur ledit au moins un organe de travail (20).

6. Procédé d'utilisation d'un système d'assistance à la conduite selon la revendication 5, **caractérisé en ce que**, après confirmation du réglage du paramètre de fonctionnement optimisé (34) sur ledit au moins un organe de travail (20), la machine de travail agricole (1) traverse une phase de stabilisation limitée dans le temps, la modification d'un ou plusieurs paramètres d'efficacité (37) et/ou critères de qualité (45) par rapport à la valeur de ces paramètres d'efficacité (37) et/ou critères de qualité (45) avant la modification des paramètres de fonctionnement (34) étant visualisée sur l'unité d'affichage (22).

7. Procédé d'utilisation d'un système d'assistance à la conduite selon la revendication 6, **caractérisé en ce que** les paramètres d'efficacité (37) et/ou critères de qualité (45) visualisés sont associés, dans l'unité de calcul, aux conditions de récolte (27) par l'intermédiaire de dépendances fonctionnelles, de sorte que des conditions de récolte variables au cours de la phase de stabilisation sont prises en compte lors de la visualisation des paramètres d'efficacité (37) et/ou critères de qualité (45).

8. Procédé d'utilisation d'un système d'assistance à la conduite selon au moins une des revendications 6 et 7, **caractérisé en ce que**, dans l'étape de menu suivante (54), l'opérateur (24) de la machine de travail agricole (1) est invité à évaluer qualitativement la modification du paramètre d'efficacité (37) et/ou du critère de qualité (45), et/ou **en ce que** le système d'assistance à la conduite (35) effectue cette évaluation lui-même et la visualise sur l'unité d'affichage (22).

9. Procédé d'utilisation d'un système d'assistance à la conduite selon la revendication 8, **caractérisé en ce que** l'évaluation qualitative est limitée à « mieux », « moins bon » ou « inchangé ».

10. Procédé d'utilisation d'un système d'assistance à la conduite selon la revendication 9, **caractérisé en ce que**, en cas de refus de la proposition ou d'évaluation qualitative « moins bon » ou « inchangé », le système d'assistance à la conduite (35) propose l'optimisation d'un autre paramètre de fonctionnement (34), la proposition étant basée sur l'analyse de connaissances expertes stockées dans l'unité de calcul (27), lesdites connaissances expertes tenant compte des relations entre différents paramètres d'efficacité (37), critères de qualité (45) et paramètres de fonctionnement (34) des organes de travail (20).

11. Procédé d'utilisation d'un système d'assistance à la conduite selon la revendication 6, **caractérisé en ce que** l'opérateur (24) de la machine de travail agricole (1) est invité, dans une étape de menu suivante (49), à accepter ou refuser l'optimisation de l'autre paramètre de fonctionnement (34), l'opérateur (24) de la machine de travail agricole (1) provoquant par confirmation ou refus l'optimisation de l'autre paramètre de fonctionnement (34).

12. Procédé d'utilisation d'un système d'assistance à la conduite selon la revendication 11, **caractérisé en ce que** la proposition d'acceptation d'un paramètre de fonctionnement optimisé (34) peut être associée à une indication d'influence sur un ou plusieurs des autres paramètres d'efficacité (37) et/ou critères de qualité (45).

13. Procédé d'utilisation d'un système d'assistance à la conduite selon une des revendications précédentes, **caractérisé en ce que**, dans une étape de menu de résultat, le résultat de l'optimisation est visualisé sur l'unité d'affichage (22).

14. Procédé d'utilisation d'un système d'assistance à la conduite selon une des revendications précédentes, **caractérisé en ce que** les paramètres d'efficacité (37) disponibles comprennent les paramètres « flux de produit/profil de travail » et/ou « perte de grain » et/ou « otons » et/ou « qualité du grain », les critères de qualité (45) « casse du grain » et/ou « ébarbage/égrenage » et/ou « propreté du grain » étant associés au paramètre d'efficacité (37) « qualité du grain », les critères de qualité (45) « quantité d'otons » et/ou « quantité de grain dans les otons » étant associés au paramètre d'efficacité (37) « otons », les critères de qualité (45) « perte de grain sur l'outil frontal » et/ou « perte de grains sur la grille de séparation » et/ou « perte de grains sur l'organe de nettoyage » et/ou « perte de grains sur l'organe de battage » étant associés au paramètre d'efficacité (37) « perte de grain », et les critères de qualité (45) « tablier de coupe » et/ou « dépose d'andain » et/ou « hache-paille porté » et/ou « dispositif de répartition de paille hachée » et/ou « canal d'alimentation » et/ou « système de battage » et/ou « dispositif de séparation » étant associés au paramètre d'efficacité (37) « flux de produit/profil de travail ».

15. Procédé d'utilisation d'un système d'assistance à la conduite selon une des revendications précédentes, **caractérisé en ce que** les paramètres d'efficacité (37) de la machine de travail agricole (1) sont optimisés au moyen d'une communication interactive en langage naturel entre l'opérateur (24) de la machine de travail agricole (1) et le système d'assistance à la conduite (35), et **en ce que** l'opérateur (24) de la machine de travail agricole (1) identifie le mode de fonctionnement critique et active le système d'assistance à la conduite (35) ou que le système d'assistance à la conduite (35) s'active de lui-même après identification d'un mode de fonctionnement critique.

16. Dispositif pour réaliser le procédé d'utilisation d'un système d'assistance à la conduite selon au moins une des revendications précédentes.
